# EUROPÄISCHE PATENTSCHRIFT

(11) **EP 1 131 580 B1**
(45) Veröffentlichungstag und Bekanntmachung des Hinweises auf die Patenterteilung: **21.01.2004**
(21) Anmeldenummer: 99972727.4
(22) Anmeldetag: 19.11.1999
(51) Int. Cl.: F16L 59/14, F17C 13/00

(54) **ROHRFÖRMIGE KONSTRUKTION**
TUBULAR CONSTRUCTION
CONSTRUCTION TUBULAIRE

(30) Priorität: 20.11.1998 AT 78098 U
(43) Veröffentlichungstag der Anmeldung: 12.09.2001
(73) Patentinhaber: MID Thondorf Liegenschaftsverwaltung AG & Co. KG, 8042 Graz (AT)
(72) Erfinder: BRUNNHOFER, Klaus, A-8010 Graz (AT)
(74) Vertreter: Kovac, Werner, Dipl.-Ing.
(86) Internationale Anmeldenummer: PCT/AT1999/000281
(87) Internationale Veröffentlichungsnummer: WO 2000/031459

(56) Entgegenhaltungen:
- FR-A- 2 753 257
- GB-A- 1 389 794
- PATENT ABSTRACTS OF JAPAN vol. 018, no. 628 (M-1713), 30. November 1994 (1994-11-30) & JP 06 241382 A (NISSAN TECHNO SERVICE KK), 30. August 1994 (1994-08-30)

## Beschreibung

Die Erfindung betrifft eine rohrförmige Konstruktion für den Transport oder zum Aufbewahren von kryogenen Medien, insbesondere von verflüssigten Gasen, wie flüssiger Wasserstoff, mit einem Innen- und einem zu diesem konzentrisch angeordneten Außenrohr, einer Vakuumisolierung zwischen diesen Rohren und einer der Außenrohr von innen abstützenden Stützkonstruktion, wobei im Zwischenraum zwischen Innen- und Außenrohr zusätzlich zur Vakuumisolierung einer Multi-Layer-Isolation untergebracht ist.

Es ist bekannt, dass sich Wasserstoff aufgrund seines geringen Molekulargewichtes und seiner hohen Verbrennungswärme besonders gut als Raketentreibstoff eignet. Flüssiger Wasserstoff gehört zu den kryogenen Treibstoffen und benötigt zu einer Anwendung in einer Antriebseinheit entsprechend wärmeisolierte Tanks und auch entsprechend wärmeisolierte Treibstoffleitungen. Aber auch im Automobilbau könnte zukünftig flüssiger Wasserstoff als Antriebsmedium Verwendung finden. Unabhängig vom Einsatz kommt neben sehr guten isolierenden Eigenschaften einer möglichst leichten und raumsparenden Bauweise der Tanks und Treibstoffleitungen eine besondere Bedeutung zu.

Rohrförmige Konstruktionen, wo bei einem doppelwandigen Aufbau eine Vakuumisolierung vorgesehen wird, sind grundsätzlich bekannt und es ist auch üblich, derartige Konstruktionen zum Aufbewahren von sehr kalten oder auch sehr heißen Medien einzusetzen.

Eine rohrförmige Konstruktion der eingangs genannten Art ist aus der GB-A-1 389 794 bekannt. An der Außenseite des Innenrohres ist ein Netz aus Draht angeordnet, über welchem sich eine aus Gewebebahnen und Metallfolie bestehende vielschichtige Wärmeisolierung befindet. Zwischen dem Außen- und dem Innenrohr sind ferner gesonderte Abstandshalter angeordnet, die einerseits für die Isolierwirkung ungünstige Kältebrücken darstellen und andererseits so angeordnet sind, dass sie die Multi-Layer-Isolierung durchstoßen und somit auch beschädigen, wodurch deren isolierende Wirkung ebenfalls beeinträchtigt wird.

Es sind ferner flexible Schlauchkonstruktionen bekannt, die zum Transport kryogener Flüssigkeiten vorgesehen sind. So ist beispielsweise aus der US 4 924 679 A ein flexibler Schlauch bekannt, welcher einen das verflüssigte Gas transportierenden Innenschlauch aus einem kälteflexiblen Material, beispielsweise aus Teflon, aufweist, über welchem ein weiterer Schlauch, welcher aus einer metallisierten Teflonhülse bestehen kann, angeordnet werden kann. In einem Abstand von diesem inneren Aufbau ist ein Außenschlauch vorgesehen. Der vom Außenrohr gebildete Zwischenraum ist mit CO₂ Gas, welches unter leichtem Druck steht, gefüllt. Das transportierte kryogene Fluid, beispielsweise flüssiger Stickstoff, bewirkt nun ein Verfestigen des CO₂, so dass der von diesem nun nicht mehr beanspruchte Raum quasi evakuiert ist. Dadurch soll auf ein wiederholtes Evakuieren zum Aufrechterhalten der Vakuumisolierung verzichtet werden können.

Bei einer rohrförmigen Konstruktion gemäß der gegenständlichen Erfindung geht es nicht um eine flexible Ausführung derselben sondern es steht im Vordergrund, bei sehr guten wärmeisolierenden Eigenschaften eine sehr leichte und trotzdem stabile Konstruktion zur Verfügung zu stellen.

Der Erfindung liegt daher die Aufgabe zu Grunde, dieses Ziel bei einer rohrförmige Konstruktion, die sowohl als Transportleitung als auch als Aufbewahrungsbehälter für ein kryogenes flüssiges Medium eingesetzt werden kann, zu erreichen.

Gelöst wird die gestellt Aufgabe erfindungsgemäß dadurch, dass die Stützkonstruktion selbsttragend ist und entweder ein Rohr ist oder sich ausschließlich aus Ringen zusammensetzt sowie aus Kohlefasern oder Glasfasern besteht, wobei sich im Raum zwischen dem Rohr bzw. den Ringen und dem Innenrohr lediglich die Multi- Layer- Isolation befindet, welche somit zwischen Außen- und Innenrohr unversehrt eingebracht ist.

Die gemäß der gegenständlichen Erfindung vorgeschlagene, doppelwandige, vakuumisolierte und durch die Multi-Layer-Isolation im Vakuumraum zusätzlich strahlungsgeschütze Konstruktion kann bei einer hervorragenden isolationswirkung mit einem vergleichsweise geringem Gewicht ausgeführt werden. Die Multi-Layer-Isolation, welche, wie an sich bekannt, aus mehreren Schichten zusammengefügter aluminiumierter Folie bzw. aluminiumiertem Papier besteht, trägt dazu bei, die Übertragung von Wärmestrahlung zwischen der kryogenen Temperatur im Innenrohr und der Außentemperatur deutlich zu reduzieren.

Der leichte Aufbau der rohrförmigen Konstruktion wird dadurch unterstützt, wenn sowohl das Innen- als auch das Außenrohr aus einem tieftemperaturbeständigen metallischen Werkstoff, insbesondere aus Chrom - Nickel - Stahl bestehen. Der Einsatz eines derartigen Materials für die beiden Rohre hat auch den Vorteil der Sicherstellung der Dichtheit, was vor allem für das Innenrohr, wo gegebenenfalls flüssiger Wasserstoff transportiert wird, von großer Bedeutung ist. Für Innen- und Außenrohr kann eine sehr geringe Wandstärke in der Größenordnung von höchstens einigen Zehntelmillimetern, insbesondere ≤ 0,3 mm, gewählt werden. Dabei kann das Innenrohr extrem dünn, etwa in der Stärke einer Folie ausgeführt werden.

Um bei einer derartigen Rohrausführung sicherzustellen, dass das Außenrohr unter dem Einfluß des aufgebrachten Vakuums nicht kollabieren kann, ist an der Innenseite des Außenrohres eine mit diesem in Kontakt stehende Stützkonstruktion eingebracht.

Auch bei dieser Stützkonstruktion wird darauf geachtet, dass sie bei hoher Stabilität ein möglichst geringes Gewicht aufweist. Als Stützkonstruktion kommt daher aus Stabilitätsgründen insbesondere ein Stützrohr in Frage, welches aus Kohlefasern oder Glasfasern gefertigt ist.

Um die Isolationswirkung der rohrförmigen Konstruktion noch weiter zu verbessern, kann die Außenseite mit einer Außenisolation, insbesondere aus einem isolierenden Schaum oder dergleichen, versehen werden.

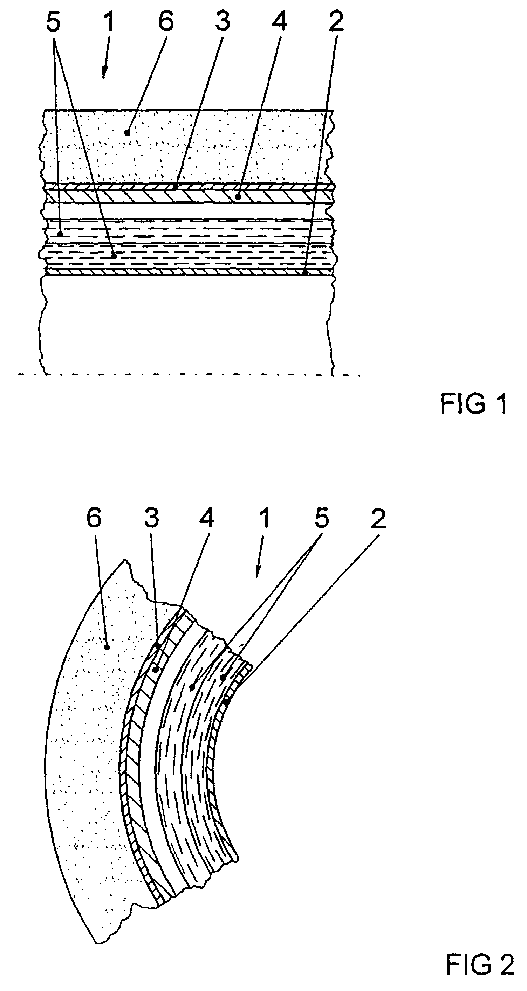

Weitere Merkmale, Vorteile und Einzelheiten der Erfindung werden nun anhand der Zeichnung, die ein Ausführungsbeispiel einer erfindungsgemäß ausgeführten rohrförmigen Konstruktion darstellt, näher beschrieben. Die beiden Zeichnungsfiguren sind dabei schematische und nicht maßstabsgetreu ausgeführte Darstellungen. Fig.1 zeigt einen Längsschnitt durch einen Abschnitt einer Ausführungsform der rohrförmigen Konstruktion und Fig.2 einen Querschnitt durch diese rohrförmige Konstruktion.

Erfindungsgemäß ausgeführte rohrförmige Konstruktionen sind insbesondere zum Transport kryogener flüssiger Medien, wie flüssigem Stickstoff, flüssigem Wasserstoff oder Wasserstoffmatsch, also Medien, die eine extrem niedrige Temperatur besitzen, vorgesehen. Erfindungsgemäß ausgeführte rohrförmige Konstruktionen können vor allem bei Treibstoffleitungen für Raketen oder Raumtransporter, wo flüssiger Wasserstoff als Treibstoff eingesetzt wird, verwendet werden. Ein möglicher alternativer Einsatzzweck erfindungsgemäß ausgeführter Konstruktionen ist bei Treibstofftanks für kryogene Flüssigkeiten gegeben. Weitere Anwendungen ergeben sich auch im Automobilbau, hier ebenfalls als Treibstoffleitung oder als Tank für Fahrzeuge mit Wasserstoffantrieb.

Wie aus den Fig.1 und Fig.2 ersichtlich ist, umfasst der grundsätzliche Aufbau der rohrförmigen Konstruktion 1 ein metallisches Innenrohr 2 und ein ebenfalls metallisches Außenrohr 3. Innenrohr 2 und Außenrohr 3 sind konzentrisch zueinander angeordnet, bestehen aus einem tieftemperaturbeständigen und die Dichtheit sicherstellenden Material, insbesondere aus Chrom-Nickel-Stahl, und sind sehr dünn ausgeführt. Die Wandstärke beträgt höchstens einige Zehntelmillimeter, insbesondere ≤ 0,3 mm. Das Innenrohr 2 tritt dabei direkt in Kontakt mit dem zu transportierenden, kryogenen Medium und kann, wenn es aus Metall besteht, extrem dünn ausgeführt werden, etwa in der Stärke einer Folie.

Das konzentrisch zum Innenrohr 2 angeordnete Außenrohr 3 sitzt auf einer Stützkonstruktion, die beim gegenständlichen Ausführungsbeispiel ebenfalls ein Rohr 4 ist. Das Stützrohr 4 besteht aus einem entsprechend stabilen Material, Kohlefasern oder Glasfasern, und wird in diesem Fall in einer Wandstärke von ≤ 1 mm, vorzugsweise in einer Wandstärke zwischen 0,3 und 1 mm, ausgeführt.

In den zwischen dem Stützrohr 4 und dem Innenrohr 2 verbleibende Raum ist ein spezielles, superisoliererndes Material eingebracht. Dieser Raum wird darüber hinaus evakuiert. Vor dem Evakuieren wird das superisolierendes Material, eine sogenannte Multi-Layer-Isolation 5, die in bekannter Weise aus mehreren, beispielsweise 10 bis 20 Schichten zusammengefügter aluminiumierter Folie bzw. aluminiumiertem Papier besteht, eingebracht. Es handelt sich daher um einen zwar mehrschichtigen, aber offenen Aufbau, so dass zusätzlich zur Multi-Layer-Isolation 5 die Übertragung von Wärmestrahlung zwischen den beiden Rohren 2, 3 noch weiter reduziert werden kann, indem, wie bereits erwähnt, der mit Multi-Layer-Isolation 5 versehene Raum evakuiert wird. Das Stützrohr 4 dient dabei zur Stützung des Außenrohres 3, um ein Kollabieren desselben sicher zu verhindern.

Wie aus den beiden Zeichnungsfiguren ersichtlich ist, ist bei diesem Ausführungsbeispiel die Multi-Layer-Isolation 5 in zwei mehrschichtigen Lagen eingebracht und füllt dabei den zur Verfügung stehenden Raum nicht komplett aus.

Zur Herstellung der rohrförmigen Konstruktion werden die Rohre 2, 3 und 4 zusammengefügt und über geeignete Flansche verbunden. Das superisolierende Material, die Multi-Layer-Isolation 5, wird im Zwischenraum positioniert, über eine weitere Flanschkonstruktion erfolgt ein Verschließen und anschließend ein Evakuieren des Zwischenraumes.

An der Außenseite der Gesamtkonstruktion kann bei Bedarf noch eine weitere isolierende Schicht 6, insbesondere aus Polyurethanschaum oder einem vergleichbaren Material, aufgebracht werden.

Bei einer erfindungsgemäßen rohrförmigen Konstruktion, die als Treibstoffleitung für flüssigen Wasserstoff eingesetzt wird, beträgt beispielsweise der Durchmesser des Innenrohres 2 in der Größenordnung von 100 bis 200 mm, der Innendurchmesser des Außenrohres 3 wird zwischen 10 und 30 mm größer gewählt als jener des Innenrohres 2.

Anstelle eines Stützrohres 4 kann auch eine aus Ringen aus Kohlefasern oder Glasfasern zusammensetzende Stützkonstruktion gewählt werden.

Gemäß der gegenständlichen Erfindung ausgeführte rohrförmige Konstruktionen zeichnen sich vor allem durch einen sehr leichten Aufbau, sehr gute isolierende Eigenschaften und eine ausgezeichnete Dichtheit aus. Darüber hinaus besitzen sie auch eine gute mechanische Festigkeit.

## Patentansprüche

1. Rohrförmige Konstruktion für den Transport oder zum Aufbewahren von kryogenen Medien, insbesondere von verflüssigten Gasen, wie flüssiger Wasserstoff, mit einem Innen- und einem zu diesem konzentrisch angeordneten Außenrohr (2, 3), einer Vakuumisolierung zwischen diesen Rohren (2, 3) und einer das Außenrohr (3) von innen abstützenden Stützkonstruktion, wobei im Zwischenraum zwischen Innen- und Außenrohr (2, 3) zusätzlich zur Vakuumisolierung eine Multi-Layer-Isolation (5) untergebracht ist,
**dadurch gekennzeichnet,**
**dass** die Stützkonstruktion selbsttragend ist und entweder ein Rohr (4) ist oder sich ausschließlich aus Ringen zusammensetzt sowie aus Kohlefasern oder Glasfasern besteht, wobei sich im Raum zwischen dem Rohr (4) bzw. den Ringen und dem Innenrohr (2) lediglich die Multi- Layer- Isolation (5) befindet, welche somit zwischen Außen- und Innenrohr (2, 3) unversehrt eingebracht ist.

2. Rohrförmige Konstruktion nach Anspruch 1, **dadurch gekennzeichnet, dass** sowohl dass Innen- als auch das Außenrohr (2, 3) aus einem tieftemperaturbeständigen metallischen Werkstoff, insbesondere aus Chrom - Nickel - Stahl, bestehen.

3. Rohrförmige Konstruktion nach Anspruch 1 oder 2, **dadurch gekennzeichnet, dass** die Wandstärke von Innen- und Außenrohr (2, 3) höchstens einige Zehntelmillimeter, insbesondere ≤ 0,3 mm, beträgt.

4. Rohrförmige Konstruktion nach einem der Ansprüche 1 bis 3, **dadurch gekennzeichnet, dass** die Stützkonstruktion eine Wandstärke von 0,3 bis 1 mm aufweist.

5. Rohrförmige Konstruktion nach einem der Ansprüche 1 bis 4, **dadurch gekennzeichnet, dass** die Außenseite mit einer Außenisolation, insbesondere aus isolierendem Schaum oder dergleichen, versehen ist.

## Claims

1. A tubular structure for transporting or storing cryogenic media, more particularly liquefied gases such as liquid hydrogen, having an inner tube (2) and an outer tube (3) which is arranged concentrically relative to the said inner tube (2), a vacuum insulation between said tubes (2, 3) and a supporting structure supporting the outer tube (3) from the inside, wherein in the space between the inner and the outer tube (2, 3), in addition to the vacuum insulation, there is accommodated a multi-layer insulation (5),
**characterised in**
**that** the supporting structure is self-carrying and is either a tube (4) or is entirely composed of rings and consists of carbon fibres or glass fibres, wherein, in the space between the tube (4) or rings and the inner tube (2), there is provided only the multi-layer insulation (5) which is thus introduced between the outer and the inner tube (2, 3) without being damaged.

2. A tubular structure according to claim 1,
**characterised in**
**that** both the inner tube (2) and the outer tube (3) consist of a low-temperature-resistant metallic material, more particularly chromium nickel steel.

3. A tubular structure according to claim 1 or 2,
**characterised in**
**that** the wall thickness of the inner tube (2) and outer tube (3) amounts at most to a few tenths of a millimetre, more particularly ≤ 0.3 mm.

4. A tubular structure according to any one of claims 1 to 3,
**characterised in**
**that** the supporting structure comprises a wall thickness of 0.3 to 1 mm.

5. A tubular structure according to any one of claims 1 to 4,
**characterised in**
**that** its outside is provided with an outer insulation, more particularly consisting of an insulating foam or the like.

## Revendications

1. Construction tubulaire pour transporter ou conserver des milieux cryogéniques, en particulier des gaz liquéfiés, tels que de l'hydrogène liquide, avec une tubulure intérieure et une tubulure extérieure (2, 3) disposée de manière concentrique par rapport à celle-ci, une isolation sous vide entre ces tubulures (2, 3) et une construction de support supportant la tubulure extérieure (3) de l'intérieur, de sorte que, dans l'espace intermédiaire entre la tubulure intérieure et la tubulure extérieure (2, 3), il est prévu une isolation à plusieurs couches (5) en plus de l'isolation sous vide,
**caractérisée en ce que** la construction de support est autoportante et est une tubulure (4) ou se compose uniquement d'anneaux ainsi que de fibres de carbone ou de fibres de verre, de sorte que, dans l'espace entre la tubulure (4) ou les anneaux et la tubulure intérieure (2), on trouve seulement une isolation à plusieurs couches (5) qui est entièrement introduite entre les tubulures extérieure et intérieure (2, 3).

2. Construction tubulaire selon la revendication 1, **caractérisée en ce qu'**aussi bien la tubulure intérieure que la tubulure extérieure (2, 3) sont constituées d'une substance métallique résistante aux basses températures, formée en particulier de chrome, de nickel, d'acier.

3. Construction tubulaire selon la revendication 1 ou 2, **caractérisée en ce que** l'épaisseur de paroi des tubulures intérieure et extérieure (2, 3) est au plus de quelques dixièmes de millimètre, en particulier est ≤ 0, 3 mm.

4. Construction tubulaire selon l'une quelconque des revendications 1 à 3, **caractérisée en ce que** la construction de support présente une épaisseur de paroi comprise entre 0,3 et 1 mm.

5. Construction tubulaire selon l'une quelconque des revendications 1 à 4, **caractérisée en ce que** le côté extérieur est doté d'une isolation extérieure, en particulier d'une mousse isolante ou similaire.
